# EUROPEAN PATENT SPECIFICATION

(11) **EP 3 628 825 B1**
(45) Date of publication and mention of the grant of the patent: **27.01.2021**
(21) Application number: 19195535.0
(22) Date of filing: 05.09.2019
(51) Int. Cl.: F01D 17/02, F01D 21/00, G01F 1/46, G01P 5/165

(54) **FLOW SENSOR RAKE ASSEMBLY**
STRÖMUNGSSENSORRECHENANORDNUNG
ENSEMBLE RÂTEAU POUR CAPTEUR DE DÉBIT

(30) Priority: 28.09.2018 GR 20180100441
(43) Date of publication of application: 01.04.2020
(73) Proprietor: Rolls-Royce plc, London N1 9FX (GB)
(72) Inventor: Kyritsis, Vasileios, Derby, Derbyshire DE24 8BJ (GB)
(74) Representative: Rolls-Royce plc

(56) References cited:
- EP-A1- 2 813 685
- EP-A2- 2 645 074
- GB-A- 2 452 026
- US-A- 4 765 751

## Description

### BACKGROUND

The present disclosure relates to a flow sensor rake arrangement for the measurement of flow field data, and more specifically, but not limited to, a flow sensor rake for use in flow machines such as compressors or turbines.

Conventionally, flow field data such as pressure, temperature, and/or flow rate for a complex flow field may be measured using a flow sensor rake. A flow sensor rake generally comprises a probe having a plurality of sensing elements depending therefrom, such that the whole apparatus forms a rake-like shape.

Flow sensor rakes may measure total pressure, static pressure and/or temperature of a moving fluid, and are advantageous over individual static sensors because they are able to provide many separate readings simultaneously, e.g. allowing a flow profile and/or average values to be calculated over the length of the probe/rake. Thus, the readings are taken at multiple points along a path defined by the rake structure.

Flow sensor rakes are often used in annular flow passages of a machine, i.e. in a flow passage defined by radially inner and outer annular walls. Gas turbine engines provide an example of a flow machine in which flow sensor rakes are used.

Conventional flow sensor rakes are straight/linear in form and, extend in a radial direction relative to the central/rotational axis of the flow machine, or perpendicular to the surface of an inner or outer wall of the relevant flow passage through the machine. The geometry of such flow sensor rakes is shown in Figure 4. Similar rakes are shown in e.g. United Kingdom patent application GB 2452026 A, European patent application EP 2645074 A2 and United States patent US 4765751: further, European patent application EP 2813685 A1 discloses struts equipped with thermal sensoros wherein the thermal measurements are used to adjust a flow rate.

Sensor rakes, when installed, are often positioned downstream of static structures. For example, when employed in gas turbine engines, the sensor rakes are located in the wake region of a circumferential array of stator vanes and/or outlet guide vanes. However, the wake region of such static structures contains significant variations in the flow field. For example, a region directly behind a vane will have a lower pressure than a region directly behind a gap between vanes. For a regular array of vanes, the flow field will thus contain corresponding regular variation in the flow field, which may be described as being periodic in the circumferential direction. It has been found that conventional rakes can be contained predominantly in one portion of the periodic flow field of the wake.

Furthermore, circumferential movement of the wakes during flight conditions means that the same sensor rake may or may not be immersed in the same portion of the periodic wake flow field depending on when measurements are taken.

It is important that the measurements taken are accurate, as flow field measurements taken using a plurality of rakes are used to determine flow characteristics for the whole flow area, typically by averaging of the measurements taken from the plurality of rakes. Key operational parameters, such as thrust, are determined using the measurements. If one or more rake is located within a periodic flow regime, the readings may reduce the accuracy of the overall/averaged flow conditions within the machine.

One option to improve accuracy is simply to improve the number of rakes such that the adverse impact of any one rake on the overall average is reduced. However, this adds weight and complexity/cost to system.

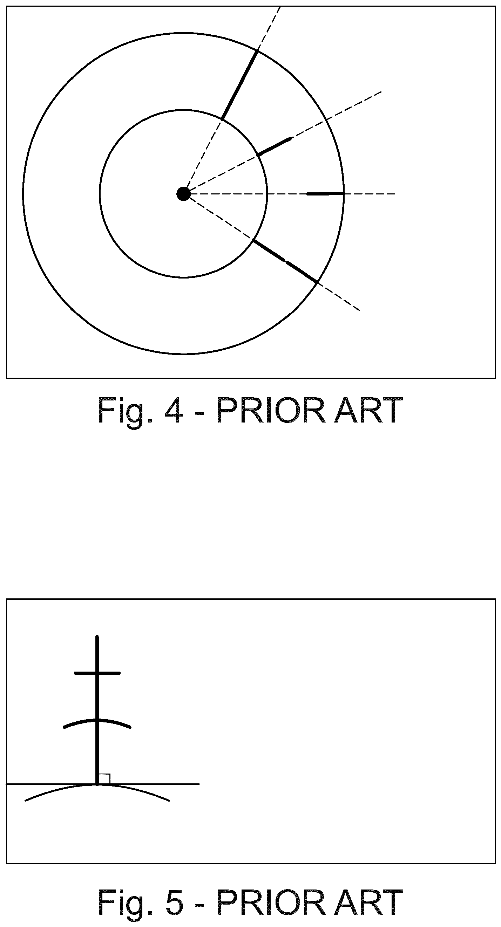

One suggested improvement is to provide the sensor rakes with arms extending in a substantially perpendicular direction to a main linear stem of the rake such that the sensor rake takes a tree-like form when viewed from the direction of the oncoming flow. However, these structures are problematic in that each arm only provides a circumferential profile at a single radial distance from the central axis or the surface normal of a machine wall. A large number of probes and secondary probes are therefore required to gather a full understanding of a complex flow field within the machine with any certainty. These sensor rakes are typically referred to as "arc rakes" because of the secondary members' arcing nature, although the secondary member may be straight. The geometry of such arc rakes is shown in Figure 5. The arc rakes add complexity and increase the obstruction to the flow through the machine.

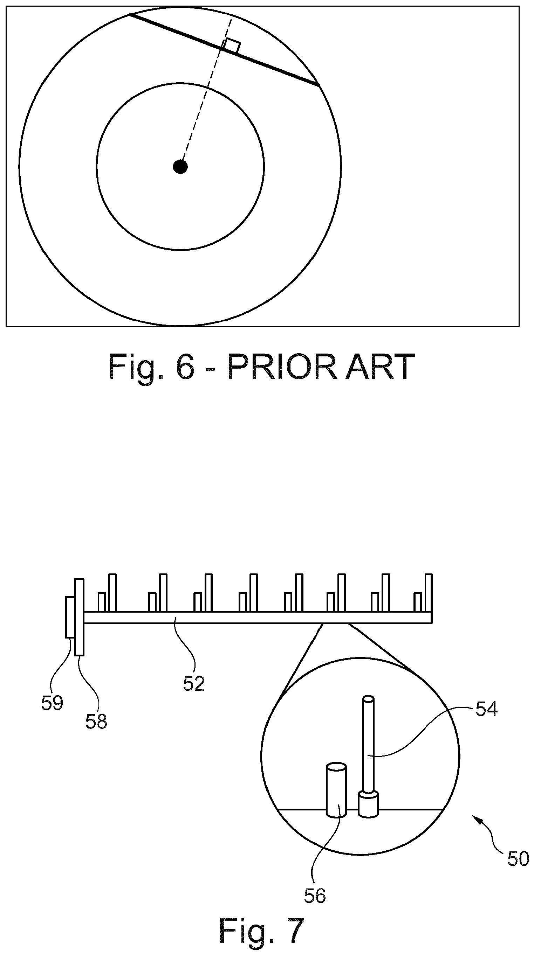

Another suggested improvement is to change the orientation of the sensor rake such that it is connected at both ends to the same outer annular wall of the flow passage, made possible because of the curvature of the wall. The geometry of such rakes is akin to a segment or chord of the outer annular wall and is shown in Figure 6. This provides a measurement cross-section that varies in both the radial and circumferential directions of the machine. However, this type of rake has significant structural implications since it requires a long rake length if it is to span a large radial span. If long rakes are used, the strength of the rake is an issue and the number of rakes that can be accommodated in an annular passage is limited. Such rakes do not therefore provide for a full understanding of a complex flow field within the machine with a great level of certainty. There is also less flexibility in how those rakes can be mounted within the confines of a specific engine architecture.

There is proposed a flow sensor rake that overcomes or mitigates one of more of the aforementioned problems.

### SUMMARY

The present disclosure provides a flow sensor rake assembly, an axial flow machine, and a gas turbine engine, as set out in the appended claims.

According to a first aspect there is provided a flow sensor rake assembly for taking flow field measurements in a flow machine, the flow machine comprising a rotor arranged to rotate about an axis so as to interact with a fluid flow through the rotor in use, and a static annular wall surrounding the axis, the annular wall being mounted axially upstream or downstream of the rotor so as to be washed by the fluid flow in use, the flow sensor rake assembly comprising: an elongate stem having first and second ends and a plurality of probes depending therefrom at spaced locations along the stem; the elongate stem being mounted to the annular wall at a first end and depending away from the annular wall to the second end; the elongate stem being obliquely angled relative to the annular wall when viewed in the axial direction; and the second end of the elongate stem being offset in a circumferential direction relative to the first end.
According to other aspects, there may be provided a flow machine, such as a gas turbine engine, or a compressor or a turbine thereof, comprising the flow sensor rake of the first aspect.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.
The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity Uₜᵢₚ. The work done by the fan blades on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being Jkg⁻¹K⁻¹/(ms⁻¹)²). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, or 17. The bypass ratio may be in an inclusive range bounded by any two of the values in the previous sentence (i.e. the values may form upper or lower bounds). The bypass duct may be substantially annular. The bypass duct may be radially outside the engine core. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds). Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 °C (ambient pressure 101.3kPa, temperature 30 °C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 16, 18, 20, or 22 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example in the order of Mach 0.8, in the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 °C.

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### BRIEF DESCRIPTION OF THE DRAWINGS

Embodiments will now be described by way of example only, with reference to the Figures, in which:
Figure 1 is a sectional side view of a gas turbine engine;
Figure 2 is a close up sectional side view of an upstream portion of a gas turbine engine;
Figure 3 is a partially cut-away view of a gearbox for a gas turbine engine;
Figure 4 is a cross-section of a first flow sensor rake assembly geometry within an axial flow machine as known in the state of the art;
Figure 5 is a cross-section of a second flow sensor rake assembly geometry within an axial flow machine as known in the state of the art;
Figure 6 is a cross-section of a third flow sensor rake assembly geometry within an axial flow machine as known in the state of the art;
Figure 7 is a perspective view of a flow sensor rake assembly;
Figure 8 is a partial cross-sectional view of an axial flow passage in which a flow sensor rake assembly is implemented;
Figure 9 is a partial cross-sectional view of an axial flow machine passage in which a further example of a flow sensor rake assembly is implemented;
Figure 10 is a partial cross-sectional view of flow field measurements having circumferential periodicity and the flow sensor rake assembly arranged relative to said flow field;
Figure 11 is a schematic partial cross-section view of a flow passage comprises a variety of different examples of flow sensor rakes;
Figure 12 shows two total pressure plots using measurements taken by a conventional rake and a rake according to an example of the invention; and
Figure 13 shows a plot of cumulative probability distribution against average total pressure for a plurality of rakes at different slant angles.

### DETAILED DESCRIPTION

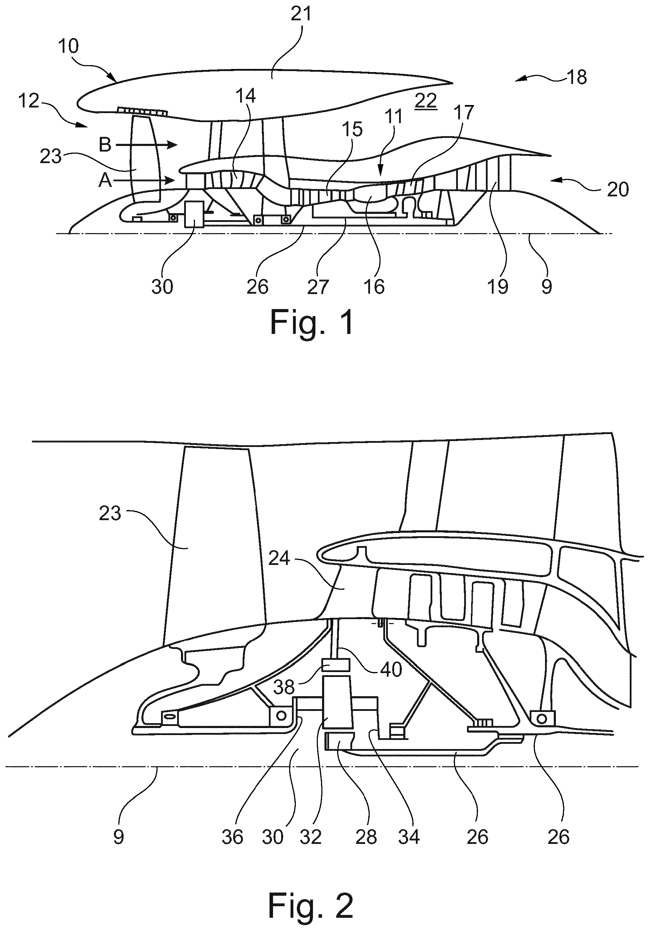

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust.

The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

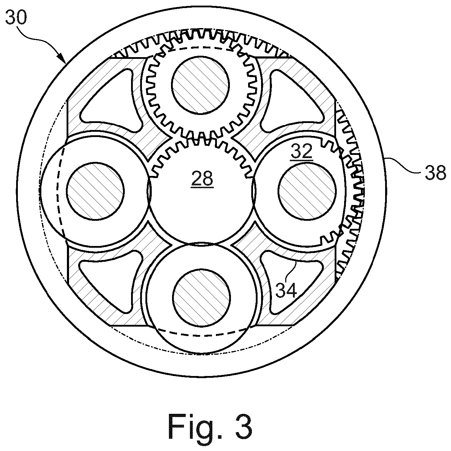

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 20, 22 meaning that the flow through the bypass duct 22 has its own nozzle that is separate to and radially outside the core exhaust nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

In other examples, the invention may be applied to different types of gas turbine engine, e.g. for different uses, such as thrust or power generation for marine, nuclear or other power generation, or other land applications, such as industrial pumping and the like.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

The flow sensor rake assembly described hereinbelow may be positioned anywhere within the path of core airflow A and/or bypass flow B. The flow sensor rake assembly described herein may be positioned in the vicinity of, e.g. downstream of, a flow machine within the engine, such as any of the low pressure compressor 14, the high pressure compressor 15, the high pressure turbine 17, and the low pressure turbine 19. Additionally or alternatively, the flow sensor rake assembly described herein may be positioned downstream of static/non-rotating structures such as any of, or any combination of, stator vanes and outlet guide vanes positioned in the path of core airflow A. Any such structures may be downstream of a rotor of the relevant flow machine.

In more general terms, the flow sensor rake assemblies described herein may be located anywhere in a continuous flow machine, typically in a complex flow field, where minimisation of sampling uncertainty is desired for a given number of measurement probes. Gas turbine engines are described as being an example of a flow machine to which the sensor rake assembly is relevant. The rake assembly may be used in axial or radial flow machines more generally, or else in a flow machine for which the direction of flow is between axial and radial directions.

Figure 7 illustrates a flow sensor rake assembly 50. The flow sensor rake assembly 50 comprises an elongate stem 52 having a plurality of probes 54, 56 protruding therefrom. At a first end of the flow sensor rake assembly 50 there is a mounting flange 58 for mounting the flow sensor rake assembly 50 to an annular wall of an axial flow machine.

The mount 58 may comprise a connection interface 59 for electrical/electronic and/or flow connections with the relevant sensing and/or signal processing equipment. The interface typically comprises a plurality of connectors.

The probes 54, 56 protrude substantially perpendicularly from the elongate stem 52 such that the flow sensor rake assembly 50 has a rake-like structure. The probes 54, 56 each have a proximal end attached to the stem 52, i.e. at spaced locations along the stem, and a free/distal end. The probes are generally straight and oriented in parallel in this example such that each probe faces the same direction with respect to the stem 52, i.e. towards the oncoming flow in use. In other examples, the probes need not be straight and could be oriented in a direction that is not perpendicular to the stem. The probes need not be parallel depending on the expected flow conditions. For example, probes could be individually or collectively oriented to follow the direction of flow in the immediate vicinity of the probe, e.g. being at different angles and/or having a varying direction along the length of each probe. Probes could be curved, if desired.

The probes comprise pitot tubes 54, e.g. including pitot-static tubes, for measuring pressure (total pressure and/or static pressure). The probes may comprise conventional pressure sensing transducers/equipment coupled with the tubes 54. In this example, thermocouple probes 56 are also provided on the rake for measuring temperature. Each of the pressure probes 54 are positioned at spaced locations along the elongate stem 52 relative to one another, and each of the thermocouple probes 56 are positioned at spaced locations along the elongate stem 52 relative to one another. One pitot-static probe 54 and one thermocouple probe 56 is positioned, e.g. as a probe pair, at each spaced location.

Each of the pressure probes 54 and thermocouple probes 56 are configured to record a measurement signal and transmit the measurement signal via wiring and/or fibres running along the elongate stem 52. Alternatively, the probes could provide a fluid connection to a transducer that is spaced from the stem, e.g. with tubes running along the stem to another suitable location for sensing.

The mounting flange 58 comprises thermocouple plugs and/or pressure/flow connections at interface 59. The signals measured using the pressure probes 54 and thermocouple probes 56 may be transmitted to a processing/control unit such that the results can be recorded and analysed. The thermocouple plugs and pressure probe connections provide individual measurement signals for each of the individual probes 54, 56 such that suitable processing equipment can determine the corresponding values of relevant variables, such as total pressure, static pressure, dynamic pressure, flow rate, temperature, etc. in a conventional manner. The processing equipment will typically determine a corresponding averaged measurement signal for each of the probes 54 and an averaged signal for each of the thermocouple probes 56.

The mounting flange 58 may also comprise a plurality of apertures located around its circumference, or other fixing formations, as a means of fixing the flow sensor rake assembly 50 to the relevant annular wall of an axial flow machine.

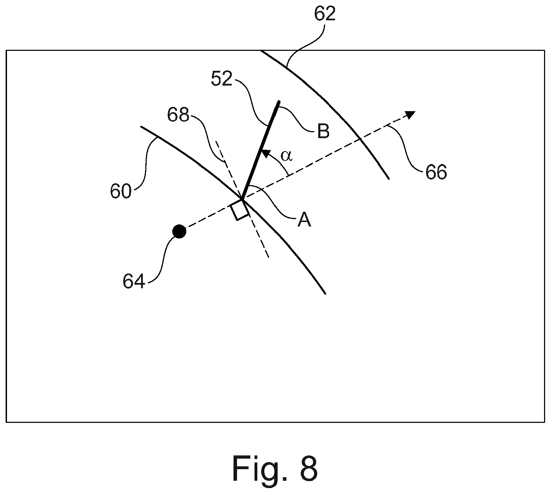

Figure 8 illustrates a flow sensor rake assembly according to the present disclosure positioned within an axial flow machine passage having an inner annulus wall 60, an outer annulus wall 62 and a central axis of rotation 64, which may correspond with the principal rotational axis 9 (shown in Fig. 1) for the engine as a whole. The flow passage is thus an annular flow space bounded by the inner 60 and outer 62 walls, e.g. bounded in a radial direction relative to the axis 64. The axial flow machine is viewed as a cross-section, as if looking along the central axis of rotation 64. The flow sensor rake assembly 50 is positioned within the axial flow machine such that a first end A of the elongate stem 52 is mounted to the inner annulus wall 60, and the elongate stem 52 depends away from the inner annulus wall 60.

Figure 8 illustrates that the elongate stem 52 is slanted relative to a radial vector 66 and a plane 68 perpendicular to the radial vector 66. The slanting rake stem 52 forms an angle α relative to the radial vector 66, where the radial vector 66 extends radially from the central axis of rotation 64. The elongate stem 52 is therefore obliquely angled relative to the inner annulus wall 60 and/or the radial direction of vector 66 such that the second end B of the elongate stem 52 is offset from the first end A of the elongate stem 52 in a circumferential direction.

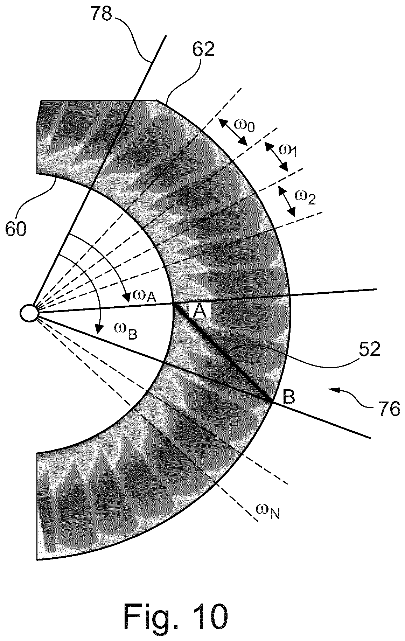

The elongate stem 52 is slanted such that the angle α has a value of greater than 0 degrees and greater than a first/minimum threshold. In some examples, the first threshold may be dependent on the circumferential periodicity of the flow sensor rake assembly or features in the flow field, which will be explained in greater detail in relation to Figure 10. In simpler terms, α must be greater than 0 degrees to ensure that the elongate stem 52 is slanted relative to radial vector 66, and must be greater than a first threshold such that the elongate stem 52 is slanted enough to traverse across at least one angular period of static structures and/or associated periodic flow features/regimes of the flow through the passage.

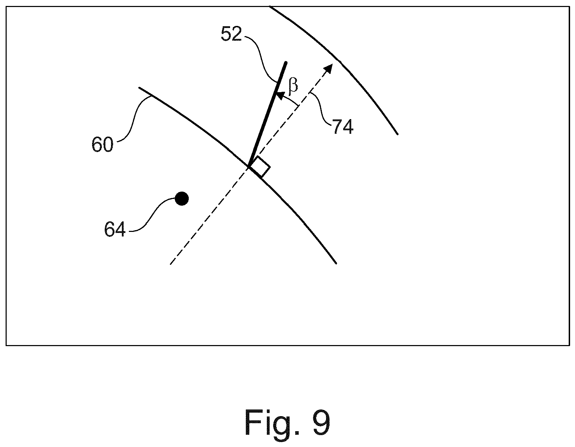

Figure 9 illustrates a flow sensor rake assembly akin to that of Figure 8 positioned in the same axial flow machine as Figure 8 and viewed along the same axis.

Figure 9 illustrates that the elongate stem 52 is slanted relative to a surface normal vector 74, forming an angle β relative to the surface normal vector 74, where the surface normal vector 74 extends normally from the inner annulus wall 60, i.e. perpendicular to a tangent or tangential plane of the inner annulus wall 60 at the point of intersection with the vector 74. The elongate stem 52 is therefore obliquely angled relative to the inner annulus wall 60 such that the second end B of the elongate stem 52 is offset from the first end A of the elongate stem 52 in a circumferential direction.

The elongate stem 52 is slanted such that β takes a value of less than 90 degrees, a value of greater than 0 degrees, and more than a second threshold, the second threshold being dependent on the circumferential periodicity of the flow sensor rake assembly, which will be explained in greater detail in relation to Figure 10 In simpler terms, β must be less than 90 degrees to ensure that the elongate stem 52 is slanted relative to the tangential of the inner annulus 60, must be greater than 0 degrees to ensure that the elongate stem 52 is slanted relative to vector 74 and may be greater than a second threshold such that the elongate stem 52 is slanted enough to traverse across at least one angular period of static structures and/or associated periodic flow features/regimes of the flow through the passage.

In the examples described herein, the angle α or β is sufficiently large that the rake stem 52 spans at least one angular period. In the particular examples herein, the optimal arrangement may be a span in the region of 1.5 times the period. However it has been found that at least some benefit can be derived by spanning only a fraction of a period, such as a quarter, third, half or three-quarters of the period. The disclosure encompasses an angle of the rake stem that is greater than any engineering tolerance produced when assembling a perpendicular rake. A minimum angle of α or β may be as little 2°, 3° or 5°. The angle may be at least 10°, 15° or 20° in other examples.
The angle α or β will be less than 90°. The maximum angle of α or β may be limited by the length of the stem, e.g. such that the stem has the requisite strength.

Diminishing benefit will also typically be achieved with the stem spanning larger numbers of periodic flow features. The maximum angle of α or β may be in the region of 80°, 70°, 60° or 50°.

The concept of slanting the elongate stem relative to any of the abovementioned vectors and/or planes is limited to the elongate stem 52 (e.g. a longitudinal axis of the elongate stem) extending between an inner annulus 60 and an outer annulus 62, where the inner annulus 60 and outer annulus 62 have differing radii. This is achieved by the elongate stem 52 extending between the inner annulus 60 and the outer annulus 62, either by the elongate stem 52 extending across the entire flow passage so as to contact both the inner annulus 60 and the outer annulus 62, or where the elongate stem 52 does not extend the whole way between the inner 60 and outer 62 walls, but the linear extrapolation of the elongate stem 52 would intersect with the opposing annulus. Thus, the angles α and β must be such that physical extension of the elongate stem 52 or the linear extrapolation of the elongate stem 52 extends from the inner 60 to the outer 62 annulus wall or vice versa.

Whilst a single stem 52 is shown in Figures 8-10, spanning the full radial height of the flow passage, the stem may be split into opposing portions/halves, e.g. with one portion depending outwardly from the inner annular wall 60 and the other portion depending inwardly from the outer annular wall 62. The distal ends of such opposing stem portions may terminate adjacent each other, e.g. being spaced by only a small gap such that the two opposing portions approximate a single stem for the purpose of taking sensor measurements across the passage.

The difference reference vectors in Figures 8 and 9 is to show that in some configurations, the inner 60 and/or outer 62 annular walls may not be symmetrical about the axis 64. Whilst in some examples, the inner and/or outer walls may be circular in section and aligned symmetrically about the central axis 64, in other examples the inner and/or outer annular walls could be offset from the axis in alignment (i.e. misaligned) and/or could be non-circular in shape such that the normal vector to wall surface is not a radial line with respect to the axis 64.

In Figures 8 and 9, the stem 52 is shown as following a straight line vector, i.e. such that the entire stem is oriented at the relevant angle. However in other examples the stem 52 could be curved in form along its length, i.e. following a curved longitudinal axis. If a curved stem is used, it is intended that the angle of the stem relative to the radial 66 and/or normal 74 vectors will always lie within the thresholds disclosed herein, e.g. for all points along its length.

Figure 10 illustrates the nature of the circumferential periodicity of an example flow field 76 which is downstream of a circumferential array of static structures within the axial flow machine. The circumferential array of static structures may comprise stator vanes or outlet guide vanes in a flow machine of a gas turbine engine of the type described herein, for example, although it will be appreciated that such static structures are used in other flow machine applications to redirect or accelerate/decelerate flow either upstream or downstream of a rotor.

A conventional circumferential array of such vanes comprises multiple angularly spaced vanes, each extending in a generally radial direction between inner and outer ends. The vanes typically span an annular flow passage of the type shown in Figures 8 and 9.

The flow field 76 immediately downstream of the vane array thus comprises flow variations reminiscent of the geometry of the vane array, i.e. including regions of high flow rate (and higher pressure) where flow passes freely through the gap between adjacent vanes, and lower flow rate (and lower pressure) behind the vanes themselves in the direction of fluid flow. Similar repeating variations in temperature also occur.

The flow field thus comprises periodic regions that repeat, e.g. regularly, in the circumferential direction dependent on the geometry of the vane array. The periodicity of the flow field variations/regions is thus described in Fig. 10 by the angular extent of each region and/or the angular spacing between corresponding flow features in adjacent regions. This angular value is denoted 'ω'. For an array of n vanes, the annular flow passage can be split into angular regions ω₀- ω_{N-1} (e.g. for a regular array: ω = 360°/n).

A general principle of the disclosure is that the angular spacing between one end of the rake stem 52 and its opposing end will be at least 0.5ω or ω, and may be at least 1.5ω or 2ω. It is to be noted that the angular spacing ω may not always be constant and so it may be necessary to define this orientation or slant of the stem 52 according to a mean average value for ω, namely ω_{N}.

In Fig. 10, relative to a common datum angle 78, the angular orientation of the opposing ends of the rake stem 52 are given as ω_{A} and ω_{B} respectively. The angular region covered by the flow sensor rake assembly (ω_{B} - ω_{A}) is defined by the first end A and the second end B of the elongate stem 52.

The circumferential periodicity of the flow sensor rake assembly can be defined as the ratio of the angular region covered by the flow sensor rake assembly (ω_{B} - ω_{A}) to the average value, ω_{N}.

The flow sensor rake assembly of the present disclosure has a circumferential periodicity of greater than 1. The flow sensor rake assembly of Figure 10 illustrates a circumferential periodicity between 2 and 3, ie the elongate stem traverses across 2-3 angular periods of the flow field regions and/or the static structures located upstream of the flow sensor rake assembly.

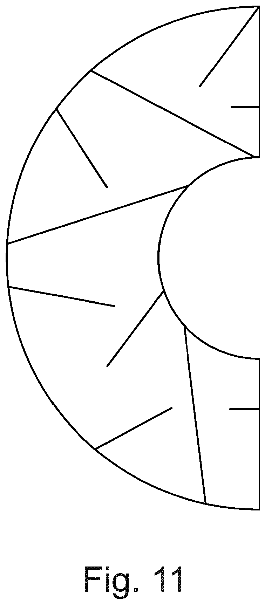

Figure 11 illustrates a variety of different rake stems that may be accommodated either individually or collectively in accordance with the present disclosure. It can be seen that any single assembly could accommodate rakes at different angles and/or of different lengths. Rakes may or may not extend across the full radial height of the flow passage. Furthermore, angled rakes according to the present disclosure could be used in combination with conventional rakes in a single assembly.

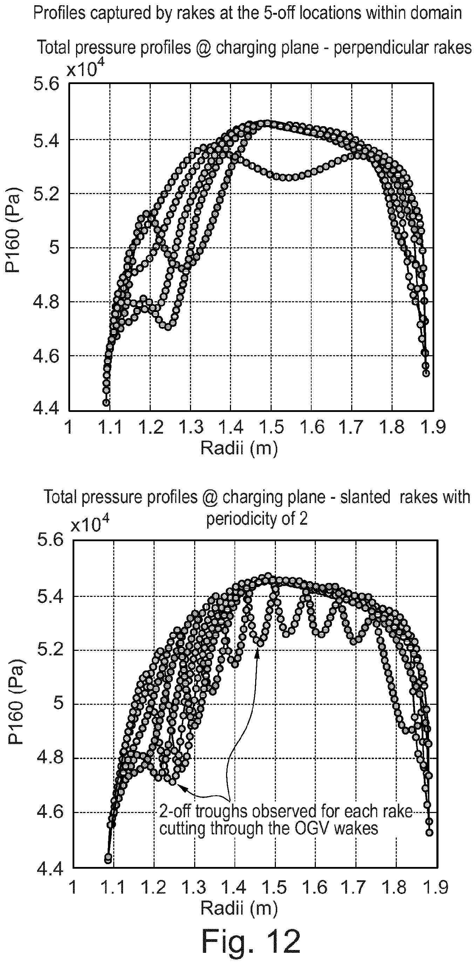

Figure 12 illustrates the total pressure profile of five flow sensor rake assemblies according to the present disclosure on the right, compared with the total pressure profile of five standard flow sensor rake assemblies on the left. The flow sensor rake assemblies used to measure the profile on the right of Figure 12 had a periodicity of between 2 and 3, ie the elongate stems of the flow sensor rake assemblies traversed across at least 2 angular periods of the static structures located upstream of the flow sensor rake assemblies.

It can be seen from Figure 12 that for each flow sensor rake assembly according to the present disclosure, two troughs in the curves are apparent, suggesting that the flow sensor rake assemblies traversed across two wakes behind respective vanes. However, for each of the standard flow sensor rake assemblies, only one trough is apparent, suggesting that the standard flow sensor rake assemblies provide a less accurate measurement of total pressure across the cross-section of the axial flow machine.

Although not shown in the left hand plot of Figure 12, it is also possible that a single rake could be almost entirely held in a wake region such that its readings would be considerably different from the other rakes. This could further skew the measurements taken collectively by all the rakes, e.g. when calculating average flow/pressure/temperature.

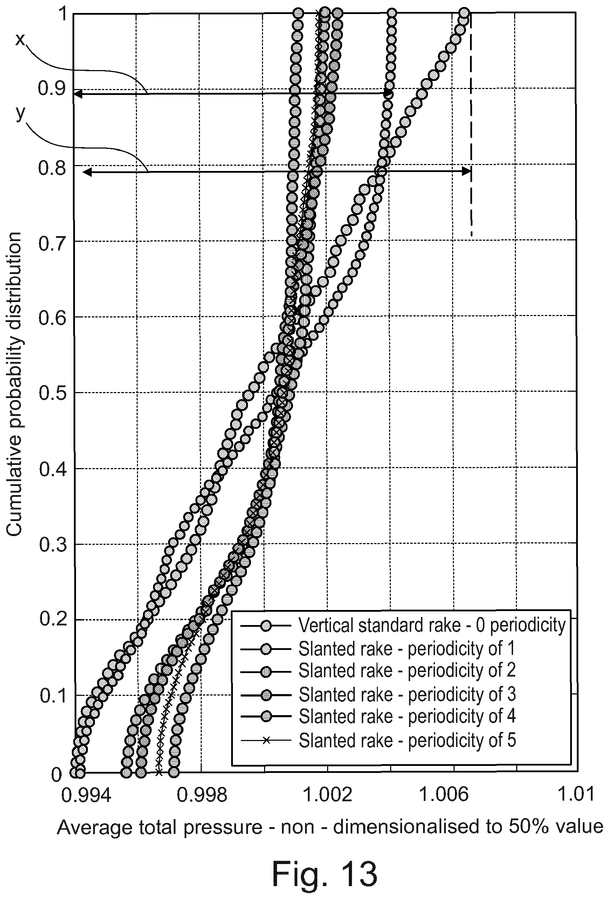

Figure 13 shows a plot illustrating potential benefits associated with the degree of slant of the rake. For perpendicular rakes distributed at circumferential spacing around an annular flow passage, it can be seen that the average total pressure readings can differ between the rakes by a relatively large margin 'x', thereby leading to the greatest degree of uncertainty in the average pressure readings. Each plot in Figure 13 concerns a rake stem leaning at a different angle to accommodate a different periodicity as described herein. As the angle of lean of the rake is increased to accommodate different periodicity, the margin of uncertainty between the rakes in the circumferential array is reduced. For example, it can be seen that the margin of uncertainty 'y' for a rake periodicity of 1 is less than the margin x. In the example plot of Figure 13, the discrepancy between average total pressure readings reaches a minimum around a periodicity of 4. However it will be appreciated that there may be other practical factors affecting the optimal rake length and angle, and also that, in other applications and flow regimes, a different optimal value may be found.

Some of the features and embodiments described herein may provide one or more of the following advantages:
- A reduction in the number of flow sensor rake assemblies required to accurately determine average fluid flow properties with a predetermined level of certainty.
- Increased accuracy in the determination of average flow properties for a flow field using a common number of rakes.
- Reduced sampling uncertainty in the determination of average or overall fluid flow properties for a flow field.
- Simple and easy to manufacture flow sensor rake geometry.
- Robustness in flow sensor rake circumferential positioning.

Although the present disclosure has been described above in relation to the measurement and characterisation of complex flow fields within axial flow machines, and more specifically gas turbine engines, the present disclosure may be used for measurement and characterisation of any complex flow field, particularly complex flow fields in which there is a need to capture elaborate flow fields. The present disclosure may be especially applicable, for example, to marine, nuclear and land applications.

Although the flow sensor rake assembly of Figure7 has been described as having pitot-static probes and thermocouple probes, it will be understood that the flow sensor rake assembly may comprise other types of sensing probe (such as Kiel probes, yaw probes, hot wire probes), or only pitot-static probes, or only thermocouple probes, or any combination of sensing probes. The principle of the disclosure herein may be relevant to any such probes.

Although the flow sensor rake assembly of Figure 7 has been described as having pressure probes and thermocouple probes positioned at specific spaced locations along the elongate stem, it will be understood that the probes may be positioned at any locations along the elongate stem provided the probes can provide a sufficient average of the measured flow field. The probes may be evenly/uniformly spaced or with varying spacing.

Although Figures 8 to 10 have been described in relation to just one flow sensor rake assembly being positioned within the axial flow machine, it will be understood that any number of flow sensor rake assemblies may be positioned around the circumference of the axial flow machine. For example, 2-20, 4-15, or 6-12 flow sensor rake assemblies may be positioned around the circumference of the axial flow machine.

Although the flow sensor rake assemblies of Figures 8-10 have been described in relation to the elongate stem having only its first end mounted at the inner annulus wall, it will be understood that the elongate stem may have only its first end mounted to the outer annulus wall, or the elongate stem may extend between, and mount to both of, the inner annulus wall and the outer annulus wall. In this respect it will also be understood that where the elongate stem has its first end mounted to the outer annulus wall, the elongate stem may be slanted relative to the surface normal vector of the outer annulus wall.

Although the elongate stems of Figures 8 to 10 have been described independently as being slanted relative to a radial vector and a plane perpendicular to the radial vector (Figure 8), and slanted relative to a surface normal vector of an annulus wall (Figure 9), it will be understood that the elongate stem of the rake sensor assembly of the present disclosure may be slanted relative to all of a radial vector, a plane perpendicular to the radial vector and a surface normal vector of one or both annulus walls.

Whilst certain benefits of the rake assembly have been described in relation to its positioning immediately downstream of a circumferential array of static structures, the rake assembly may also be beneficial when placed in a free stream, i.e. a generally non-rotating flow, in order to assess/capture flow field variations in a circumferential direction, e.g. upstream of a rotor. The rake assembly may also be beneficial when placed in a rotating/vortical flow downstream of a rotor, regardless of whether it is immediately preceded by a vane array or other static structures, such as struts or the like.

It will be understood that the invention is not limited to the embodiments above-described and various modifications and improvements can be made without departing from the concepts described herein within the scope of the following claims.

## Claims

1. A flow sensor rake assembly (50) for taking flow field measurements in a flow machine, the flow machine comprising a rotor arranged to rotate about an axis so as to interact with a fluid flow through the rotor in use, and a static annular wall (60) surrounding the axis, the annular wall (60) being mounted axially upstream or downstream of the rotor so as to be washed by the fluid flow in use, the flow sensor rake assembly comprising:
an elongate stem (52) having first and second ends (A, B) and a plurality of probes (54, 56) depending therefrom at spaced locations along the stem (52);
the elongate stem (52) being mounted to the annular wall (60) at a first end (A) and depending away from the annular wall (60) to the second end (B);
the elongate stem (52) being obliquely angled relative to the annular wall (60) when viewed in the axial direction; and
the second end (B) of the elongate stem (52) being offset in a circumferential direction relative to the first end (A).

2. A flow sensor rake assembly (50) according to claim 1, the elongate stem (52) being obliquely angled relative to the annular wall (60) and/or its surface normal vector (74) at the first end (A).

3. A flow sensor rake assembly (50) according to claim 1 or 2, the flow machine having an axis of rotation (9, 64) and the elongate stem (52) being obliquely angled relative to a radial direction with respect to said axis of rotation (9, 64), wherein, the elongate stem (52) may be obliquely angled relative to the radial direction of the axial flow machine at the first end (A).

4. A flow sensor rake assembly (50) according to any preceding claim, arranged for location in an annular flow field having circumferentially periodic flow field regions and the flow sensor rake assembly is obliquely angled so as to span at least a half or one of said periodic flow field regions.

5. A flow sensor rake assembly (50) according to claim 4, wherein the second end (B) of the elongate stem (52) is offset in the circumferential direction relative to the first end (A) of the elongate stem (52) such that the length of the elongate stem (52) traverses at least one or two of said periodic flow field regions.

6. A flow sensor rake assembly (50) according to any preceding claim, wherein the static annular wall (60) of the axial flow machine is a first annular wall (60) of the assembly (50), the assembly (50) further comprising a second static annular wall (62) surrounding the axis, the first static annular wall (60) and the second static annular (62) wall defining an annular flow passage, wherein the elongate stem (52) may be obliquely angled relative to the surface normal of the first static annular wall (60) and/or the surface normal of the second static annular wall (62).

7. A flow sensor rake assembly (50) according to claim 6, the elongate stem (52) being obliquely angled relative to the second static annular wall (62) at the second end (B) and/or along a majority or all of the length of the stem between the first (A) and second (B) ends.

8. A flow sensor rake assembly (50) according to claim 6 or 7, wherein the elongate stem (52) depends away from the first static annular wall (60) in a direction that intersects with the second static annular wall (62).

9. A flow sensor rake assembly (50) according to any one of claims 6 to 8, the second end (B) of the elongate stem (52) being mounted to the second annular wall (62) such that the elongate stem (52) extends across the entire annular flow passage radial height from the first annular wall (60) to the second annular wall (62).

10. A flow sensor rake assembly (50) according to any one of claims 6 to 9, comprising a first and second elongate stems the second end (B) of the first elongate stem (52) terminating within the annular flow passage part way between the first (60) and second (62) annular wall, and the second elongate stem being mounted to the second annular wall (62) and depending away from the second annular wall (62) to a location within the annular flow passage part way between the first (60) and second (62) annular wall.

11. A flow sensor rake assembly (50) according to any preceding claim, the elongate stem (52) having a straight line profile between the first end (A) and the second end (B).

12. A flow sensor rake assembly (50) according to any preceding claim, the plurality of probes (54, 56) comprising any or any combination of pitot tubes (54), pitot-static tubes, thermocouple probes (56), Kiel probes, yaw probes, and hot wire anemometers/probes.

13. A flow sensor rake assembly (50) according to any preceding claim, the flow field measurements comprising any or any combination of total pressure, static pressure and temperature.

14. An axial flow machine comprising a rotor arranged to rotate about an axis so as to interact with a fluid flow through the rotor in use, and a static annular wall (60) surrounding the axis, the annular wall (60) being mounted axially upstream or downstream of the rotor so as to be washed by the fluid flow in use, and at least one flow sensor rake assembly (50) according to any preceding claim.

15. An axial flow machine according to claim 14, further comprising a plurality of flow sensor rake assemblies (50).

16. A gas turbine engine (10) for an aircraft, the gas turbine engine comprising:
an engine core (11) comprising a turbine (19), a compressor (14), and a core shaft (26) connecting the turbine to the compressor;
a fan (23) located upstream of the engine core, the fan comprising a plurality of fan blades;
a gearbox (30) that receives an input from the core shaft (26) and outputs drive to the fan so as to drive the fan at a lower rotational speed than the core shaft; and
a flow sensor rake assembly for taking flow field measurements for the flow through the engine core, wherein the flow sensor rake assembly comprises:
an elongate stem (52) having first and second ends (A, B) and a plurality of probes (54, 56) depending therefrom at spaced locations along the stem (52);
the elongate stem (52) being mounted to a first annular wall (60) of the engine core (11) at the first end (A) and depending away from the first annular wall (60) to the second end (B); and the elongate stem (52) being obliquely angled relative to the first annular wall (60) when viewed in the axial direction and the second end (B) of the elongate stem (52) being offset in a circumferential direction relative to the first end (A).

## Patentansprüche

1. Strömungssensor-Recheneinheit (50) zur Vornahme von Strömungsfeldmessungen in einer Strömungsmaschine, wobei die Strömungsmaschine einen Rotor umfasst, der für eine Rotation um eine Achse angeordnet ist, für eine Interaktion mit einem Fluidstrom durch den Rotor im Einsatz, und mit einer statischen ringförmigen Wand (60), welche die Achse umgibt, wobei die ringförmige Wand (60) axial stromaufwärts oder stromabwärts des Rotors angebracht ist, so dass sie im Einsatz durch das Fluid gespült wird, wobei die Strömungssensor-Recheneinheit folgendes umfasst:
einen länglichen Schaft (52) mit ersten und zweiten Enden (A, B) und einer Mehrzahl von Sonden (54, 56), die entlang des Schafts (52) an beabstandeten Positionen von diesem abhängig sind;
wobei der längliche Schaft (52) an einem ersten Ende (A) an der ringförmigen Wand (60) angebracht ist und von der ringförmigen Wand (60) zu dem zweiten Ende (B) abhängig ist;
wobei der längliche Schaft (52) bei einer Betrachtung in die axiale Richtung einen schiefen Winkel im Verhältnis zu der ringförmigen Wand (60) aufweist; und
wobei das zweite Ende (B) des länglichen Schafts (52) in eine umfängliche Richtung im Verhältnis zu dem ersten Ende (A) versetzt ist.

2. Strömungssensor-Recheneinheit (50) nach Anspruch 1, wobei der längliche Schaft (52) in einem schiefen Winkel zu der ringförmigen Wand (60) angeordnet ist und/oder dessen Normalenvektor (74) der Oberfläche an dem ersten Ende (A).

3. Strömungssensor-Recheneinheit (50) nach Anspruch 1 oder 2, wobei die Strömungsmaschine eine Rotationsachse (9, 64) aufweist, und wobei der längliche Schaft (52) im Verhältnis zu einer radialen Richtung einen schiefen Winkel im Verhältnis zu der Rotationsachse (9, 64) aufweist, wobei der längliche Schaft (52) einen schiefen Winkel im Verhältnis zu der radialen Richtung der axialen Strömungsmaschine an dem ersten Ende (A) aufweisen kann.

4. Strömungssensor-Recheneinheit (50) nach einem der vorstehenden Ansprüche, wobei diese für eine Positionierung in einem ringförmigen Strömungsfeld mit umfänglich periodischen Strömungsfeldbereichen angeordnet ist, und wobei die Strömungssensor-Recheneinheit einen schiefen Winkel aufweist, so dass sie mindestens einen halben oder einen ganzen der periodischen Strömungsfeldbereiche umfasst.

5. Strömungssensor-Recheneinheit (50) nach Anspruch 4, wobei das zweite Ende (B) des länglichen Schafts (52) in die umfängliche Richtung im Verhältnis zu dem ersten Ende (A) des länglichen Schafts (52) versetzt ist, so dass die Länge des länglichen Schafts (52) mindestens einen oder zwei periodische Strömungsfeldbereiche durchquert.

6. Strömungssensor-Recheneinheit (50) nach einem der vorstehenden Ansprüche, wobei die statische ringförmige Wand (60) der axialen Strömungsmaschine eine erste ringförmige Wand (60) der Einheit (50) ist, wobei die Einheit (50) ferner eine zweite statische ringförmige Wand (62) umfasst, welche die Achse umgibt, wobei die erste statische ringförmige Wand (60) und die zweite statische ringförmige Wand (62) einen ringförmigen Strömungskanal definieren, wobei der längliche Schaft (52) einen schiefen Winkel zu der zu der ersten statischen ringförmigen Wand (60) senkrechten Oberfläche und/oder zu der zu der zweiten statischen ringförmigen wand (62) senkrechten Oberfläche aufweisen kann.

7. Strömungssensor-Recheneinheit (50) nach Anspruch 6, wobei der längliche Schaft (52) einen schiefen Winkel im Verhältnis zu der zweiten statischen ringförmigen Wand (62) an dem zweiten Ende (B) aufweist und/oder entlang eines Großteils oder der gesamten Länge des Schafts zwischen dem ersten (A) und dem zweiten (B) Ende.

8. Strömungssensor-Recheneinheit (50) nach Anspruch 6 oder 7, wobei der längliche Schaft (52) von der ersten statischen ringförmigen Wand (60) in eine Richtung abhängig ist, welche die zweite statische ringförmige Wand (62) schneidet.

9. Strömungssensor-Recheneinheit (50) nach einem der Ansprüche 6 bis 8, wobei das zweite Ende (B) des länglichen Schafts (52) so an der zweiten ringförmigen Wand (62) angebracht ist, dass sich der längliche Schaft (52) über die ganze radiale Höhe des ringförmigen Strömungskanals von der ersten ringförmigen Wand (60) zu der zweiten ringförmigen Wand (62) erstreckt.

10. Strömungssensor-Recheneinheit (50) nach einem der Ansprüche 6 bis 9, die einen ersten und zweiten länglichen Schaft umfasst, wobei das zweite Ende (B) des ersten länglichen Schafts (52) in dem ringförmigen Strömungskanal zwischen der ersten (60) und zweiten (62) ringförmigen Wand endet, und wobei der zweite längliche Schaft an der zweiten ringförmigen Wand (62) angebracht ist und von der zweiten ringförmigen Wand (62) an eine Position in dem ringförmigen Strömungskanal zwischen der ersten (60) und der zweiten (62) ringförmigen Wand abhängig ist.

11. Strömungssensor-Recheneinheit (50) nach einem der vorstehenden Ansprüche, wobei der längliche Schaft (52) zwischen dem ersten Ende (A) und dem zweiten Ende (B) ein geradliniges Profil aufweist.

12. Strömungssensor-Recheneinheit (50) nach einem der vorstehenden Ansprüche, wobei die Mehrzahl von Sonden (54, 56) eines der folgenden oder eine beliebige Kombination der folgenden umfasst: von Pitotrohren (54), statischen Pitotrohren, Thermoelementsonden (56), Kielsonden, Gier-Sonden und Hitzdraht-Anemometern/Sonden.

13. Strömungssensor-Recheneinheit (50) nach einem der vorstehenden Ansprüche, wobei die Strömungsfeldmessungen eines der folgenden oder eine beliebige Kombination der folgenden umfassen: Gesamtdruck, statischer Druck und Temperatur.

14. Axiale Strömungsmaschine, die einen Rotor umfasst, der so angeordnet ist, dass er sich um eine Achse dreht, für eine Interaktion mit einem Fluidstrom durch den Rotor im Einsatz, und mit einer statischen ringförmigen Wand (60), welche die Achse umgibt, wobei die ringförmige Wand (60) axial stromaufwärts oder stromabwärts des Rotors angebracht ist, so dass sie im Einsatz durch das Fluid gespült wird, und mit einer Strömungssensor-Recheneinheit (50) nach einem der vorstehenden Ansprüche.

15. Axiale Strömungsmaschine nach Anspruch 14, die ferner eine Mehrzahl von Strömungssensor-Recheneinheiten (50) umfasst.

16. Gasturbinenmotor (10) für ein Luftfahrzeug, wobei der Gasturbinenmotor folgendes umfasst:
einen Motorkern (11), der eine Turbine (19), einen Kompressor (14) und eine Kernwelle (26) umfasst, welche die Turbine mit dem Kompressor verbindet;
einen Fan (23), der stromaufwärts des Motorkerns angeordnet ist, wobei der Fan eine Mehrzahl von Fan-Schaufeln umfasst;
ein Getriebe (30), das einen Eingang von der Kernwelle (26) empfängt und Antrieb an den Fan ausgibt, um den Fan mit einer niedrigeren Drehzahl als die Kernwelle anzutreiben; und
eine Strömungssensor-Recheneinheit zur Vornahme von Strömungsfeldmessungen für die Strömung durch den Motorkern, wobei die Strömungssensor-Recheneinheit folgendes umfasst: einen länglichen Schaft (52) mit ersten und zweiten Enden (A, B) und einer Mehrzahl von Sonden (54, 56), die an beabstandeten Position entlang des Schafts (52) davon abhängig sind; wobei der längliche Schaft (52) an dem ersten Ende (A) an einer ersten ringförmigen Wand (60) des Motorkerns (11) angebracht ist und von der ersten ringförmigen Wand (60) zu dem zweiten Ende (B) abhängig ist; und wobei der längliche Schaft (52) bei einer Betrachtung in die axiale Richtung einen schiefen Winkel im Verhältnis zu der ringförmigen Wand (60) aufweist; und wobei das zweite Ende (B) des länglichen Schafts (52) in eine umfängliche Richtung im Verhältnis zu dem ersten Ende (A) versetzt ist.

## Revendications

1. Ensemble râteau (50) de capteur de débit pour prendre des mesures de champ d'écoulement dans une machine d'écoulement, la machine d'écoulement comprenant un rotor conçu pour tourner autour d'un axe de sorte à interagir avec un écoulement de fluide à travers le rotor lors de l'utilisation, et une paroi annulaire statique (60) entourant l'axe, la paroi annulaire (60) étant montée axialement en amont ou en aval du rotor de sorte à être lavée par l'écoulement de fluide lors de l'utilisation, l'ensemble râteau de capteur de débit comprenant :
une tige allongée (52) ayant des première et seconde extrémités (A, B) et une pluralité de sondes (54, 56) qui s'étend à partir de celles-ci au niveau d'endroits espacés le long de la tige (52) ;
la tige allongée (52) étant montée sur la paroi annulaire (60) au niveau d'une première extrémité (A) et s'étendant à l'opposé de la paroi annulaire (60) vers la seconde extrémité (B) ;
la tige allongée (52) étant obliquement inclinée par rapport à la paroi annulaire (60) lorsqu'elle est vue dans la direction axiale ; et
la seconde extrémité (B) de la tige allongée (52) étant décalée dans une direction circonférentielle par rapport à la première extrémité (A).

2. Ensemble râteau (50) de capteur de débit selon la revendication 1, la tige allongée (52) étant inclinée obliquement par rapport à la paroi annulaire (60) et/ou à son vecteur normal à la surface (74) au niveau de la première extrémité (A).

3. Ensemble râteau (50) de capteur de débit selon la revendication 1 ou 2, la machine d'écoulement ayant un axe de rotation (9, 64) et la tige allongée (52) étant inclinée obliquement par rapport à une direction radiale par rapport audit axe de rotation (9, 64), la tige allongée (52) pouvant être inclinée obliquement par rapport à la direction radiale de la machine d'écoulement axial au niveau de la première extrémité (A).

4. Ensemble râteau (50) de capteur de débit selon l'une quelconque des revendications précédentes, conçu pour être placé dans un champ d'écoulement annulaire ayant des régions de champ d'écoulement circonférentiellement périodique et l'ensemble râteau de capteur de débit étant incliné obliquement de sorte à couvrir au moins une moitié ou une desdites régions de champ d'écoulement périodique.

5. Ensemble râteau (50) de capteur de débit selon la revendication 4, la seconde extrémité (B) de la tige allongée (52) étant décalée dans la direction circonférentielle par rapport à la première extrémité (A) de la tige allongée (52) de sorte que la longueur de la tige allongée (52) traversant au moins une ou deux desdites régions de champ d'écoulement périodique.

6. Ensemble râteau (50) de capteur de débit selon l'une quelconque des revendications précédentes, la paroi annulaire statique (60) de la machine d'écoulement axial étant une première paroi annulaire (60) de l'ensemble (50), l'ensemble (50) comprenant en outre une seconde paroi annulaire statique (62) entourant l'axe, la première paroi annulaire statique (60) et la seconde paroi annulaire statique (62) définissant un passage d'écoulement annulaire, la tige allongée (52) pouvant être inclinée obliquement par rapport à la surface normale de la première paroi annulaire statique (60) et/ou à la surface normale de la seconde paroi annulaire statique (62).

7. Ensemble râteau (50) de capteur de débit selon la revendication 6, la tige allongée (52) étant inclinée obliquement par rapport à la seconde paroi annulaire statique (62) au niveau de la seconde extrémité (B) et/ou le long d'une majorité ou de la totalité de la longueur de la tige entre les première (A) et seconde (B) extrémités.

8. Ensemble râteau (50) de capteur de débit selon la revendication 6 ou 7, la tige allongée (52) s'étendant à l'opposé de la première paroi annulaire statique (60) dans une direction qui coupe la seconde paroi annulaire statique (62).

9. Ensemble râteau (50) de capteur de débit selon l'une quelconque des revendications 6 à 8, la seconde extrémité (B) de la tige allongée (52) étant montée sur la seconde paroi annulaire (62) de sorte que la tige allongée (52) s'étende sur toute la hauteur radiale du passage d'écoulement annulaire de la première paroi annulaire (60) à la seconde paroi annulaire (62).

10. Ensemble râteau (50) de capteur de débit selon l'une quelconque des revendications 6 à 9, comprenant des première et seconde tiges allongées, la seconde extrémité (B) de la première tige allongée (52) se terminant à l'intérieur du passage d'écoulement annulaire à mi-chemin entre les première (60) et seconde (62) parois annulaires, et la seconde tige allongée étant montée sur la seconde paroi annulaire (62) et s'étendant à l'opposé de la seconde paroi annulaire (62) vers un emplacement à l'intérieur du passage d'écoulement annulaire à mi-chemin entre les première (60) et seconde (62) parois annulaires.

11. Ensemble râteau (50) de capteur de débit selon l'une quelconque des revendications précédentes, la tige allongée (52) ayant un profil en ligne droite entre la première extrémité (A) et la seconde extrémité (B).

12. Ensemble râteau (50) de capteur de débit selon l'une quelconque des revendications précédentes, la pluralité de sondes (54, 56) comprenant l'un quelconque ou une combinaison quelconque de tubes de Pitot (54), de tubes de Pitot statiques, de sondes de thermocouple (56), de sondes de Kiel, de sondes de lacet et d'anémomètres/sondes à fil chaud.

13. Ensemble râteau (50) de capteur de débit selon l'une quelconque des revendications précédentes, les mesures de champ de débit comprenant toute pression totale, pression statique et température ou toute combinaison de celles-ci.

14. Machine d'écoulement axial comprenant un rotor conçu pour tourner autour d'un axe de sorte à interagir avec un écoulement de fluide à travers le rotor lors de l'utilisation, et une paroi annulaire statique (60) entourant l'axe, la paroi annulaire (60) étant montée axialement en amont ou en aval du rotor de sorte à être lavée par l'écoulement de fluide lors de l'utilisation, et au moins un ensemble râteau (50) de capteur de débit selon l'une quelconque des revendications précédentes.

15. Machine d'écoulement axial selon la revendication 14, comprenant en outre une pluralité d'ensembles râteaux (50) de capteur de débit.

16. Turbine à gaz (10) pour un aéronef, la turbine à gaz comprenant :
un noyau central (11) comprenant une turbine (19), un compresseur (14), et un arbre de noyau (26) reliant la turbine au compresseur ;
un ventilateur (23) situé en amont du noyau central, le ventilateur comprenant une pluralité d'aubes de ventilateur ;
une boîte de vitesses (30) qui reçoit une entrée de l'arbre de noyau (26) et transmet l'entraînement au ventilateur de sorte à entraîner le ventilateur à une vitesse de rotation inférieure à celle de l'arbre de noyau ; et
un ensemble râteau de capteur de débit pour prendre des mesures de champ d'écoulement pour l'écoulement à travers le noyau central, l'ensemble râteau de capteur de débit comprenant :
une tige allongée (52) ayant des première et seconde extrémités (A, B) et une pluralité de sondes (54, 56) qui s'étend à partir de celles-ci au niveau d'endroits espacés le long de la tige (52) ;
la tige allongée (52) étant montée sur une première paroi annulaire (60) du noyau central (11) au niveau de la première extrémité (A) et s'étendant à l'opposé de la première paroi annulaire (60) vers la seconde extrémité (B) ; et la tige allongée (52) étant obliquement inclinée par rapport à la première paroi annulaire (60) lorsqu'elle est vue dans la direction axiale et la seconde extrémité (B) de la tige allongée (52) étant décalée dans une direction circonférentielle par rapport à la première extrémité (A).
